# EUROPEAN PATENT SPECIFICATION

(11) **EP 4 599 597 B1**
(45) Date of publication and mention of the grant of the patent: **22.04.2026**
(21) Application number: 23786661.1
(22) Date of filing: 28.09.2023
(51) Int. Cl.: H04Q 11/00

(54) **METHOD AND APPARATUS ASSOCIATED WITH OPTICAL SWITCHING**
VERFAHREN UND VORRICHTUNG IN ZUSAMMENHANG MIT OPTISCHEM SCHALTEN
PROCÉDÉ ET APPAREIL ASSOCIÉS À UNE COMMUTATION OPTIQUE

(30) Priority: 03.10.2022 GB 202214533
(43) Date of publication of application: 13.08.2025
(73) Proprietor: Finchetto Limited, Newport, Wales NP18 2HJ (GB)
(72) Inventor: PEARCEY, Michael, Newport, Wales NP18 2HJ (GB); RUSHWORTH, Mark, Newport, Wales NP18 2HJ (GB)
(74) Representative: HGF
(86) International application number: PCT/GB2023/052509
(87) International publication number: WO 2024/074804

(56) References cited:
- GB-A- 2 264 410
- JP-A- H06 261 073
- NIU YARU ET AL: "Research progress on periodically poled lithium niobate for nonlinear frequency conversion", INFRARED PHYSICS AND TECHNOLOGY., vol. 125, 1 September 2022 (2022-09-01), GB, pages 104243, XP093103922, ISSN: 1350-4495, DOI: 10.1016/j.infrared.2022.104243

## Description

The present invention relates to an optical switch. Aspects of the invention relate to an optical switch, a method of operating an optical switch, and a system comprising an optical switch.

### BACKGROUND

Data centres tend to use data networks to communicate between a plurality of interconnected server computers, otherwise known as nodes. Each node has a unique address which enables network switches, such as layer 2 network switches, to transmit data from a first node to an intended recipient node.

Network switches are typically electronic switches. A commercial layer 2 network switch usually contains the capability of supporting approximately 50 nodes within a network. Data centres with large numbers of nodes will therefore use different types of architectures to connect more nodes than be supported by an individual network switch. Since an average data centre transmits data from over 40,000 nodes, a large number of network switches are required to route the data. GB2264410A relates to a self-routing optical switch consisting of a non-linear material surrounded by an array of reflecting or semi-reflecting mirrors or surfaces. JPH06261073 A relates to an optical packet switch able to extract address information from a high speed optical packet and to select its output destination.

It is in this context that the present invention is devised.

### BRIEF SUMMARY

In one aspect, an optical switch includes an input for receiving an optical data input and an optical address input, wherein the optical data input comprises a first optical beam modulated on a first frequency and the optical address input comprises a second optical beam modulated on a second frequency. The optical switch further includes an output for outputting an optical data output. The optical switch additionally includes a first non-linear optical medium, where the first non-linear optical medium is arranged to combine the optical data input and the optical address input to generate the optical data output. A frequency of the optical data output is dependent on a frequency of the optical data input and a frequency of the optical address input.

Advantageously, the use of a non-linear optical medium enables logic operations to be performed entirely within the optical domain.

Further advantageously, performing logic operations in the optical domain results in optical switches which consume less power and have a faster switching capacity than current state of the art electronic switches. The faster switching capacity enables the data throughput of the optical switch to be maximised.

Each switching operation performed within an electronic network switch requires an electronic logic operation to correctly route the data to the intended node. This logic operation produces both latency and power consumption within the network switch. With the average data centre pushing data from 40000 nodes at approximately 25Gb/s per network connection, layer 2 electronic switches are estimated to be responsible for 20% of the power consumption drawn by data centres. In addition, data centres themselves are responsible for approximately 3.7% of global carbon emissions - a number which is increasing year-by-year. With data creation rates estimated to increase from 97 to 181 Zetabytes between 2022 and 2025, data centre scale-ups are not sustainable during the global efforts to reduce carbon emissions.

Optical transceivers can be used to transmit data optically at very high rates but current technology still requires the switching operation itself to be performed in the electronic domain because an electronic logic operation is required. It is therefore still necessary to consume power to perform the electronic switching operation, and power is further consumed when converting the transmission data between electronic and optical transmission means.

With the fully optical switch according to the present invention, electronic logic is not used during data transmission between nodes. Instead, the logic operation is performed fully in the optical domain. The optical switch requires less power than an electronic switch because it is not necessary to power an electronic logic operation, nor is it necessary to convert the data between electronic and optical transmission means.

Furthermore, current optical transceivers are capable of sending data at very high bandwidths, such as 400Gb/s per serial channel. However, the switching capacity is still limited by the 25Gb/s per port capability of traditional state of the art electronic switches. The switching capacity per port is therefore bottlenecked from the 400Gb/s transmission links to 25Gb/s at the switch, so the network does not operate as fast as it could. Electronic switches therefore incur a delay caused by the logic operations performed for the data routing and switching. In contrast, the passive nature of the fully optical switch of the present invention means that there is no limitation to the throughput of the optical switch. The optical switch can therefore keep up with all data transmission speeds so there is no bottleneck formed at the switch and no delay caused by performing the logic operations. Data can be transmitted through the optical switch at, for example, 400Gb/s to match the transmission speed of the data. This data throughput is 15 times greater than can currently be achieved using state of the art electronic switches.

In an embodiment, the input of the optical switch comprises a data input for receiving the optical data input and an address input for receiving the optical address input.

In an embodiment, the frequency of the optical data output is dependent on an arithmetic operation of the frequency of the optical data input and the frequency of the optical address input. The arithmetic operation may be an operation to sum the frequencies of the optical data input and the optical address input.

Advantageously, this manipulation of the optical signals input to the non-linear optical medium enables logic operations to be performed entirely within the optical domain. There is no need to convert the data input or the address input into an electronic signal in order to perform the logic operation. Converting optical signals to electronic signals for logic operations, and then back to optical signals, incurs a large power consumption penalty which is alleviated by performing the logic operations in the optical domain.

In an embodiment, the first non-linear optical medium comprises a sum frequency generation, SFG, crystal.

Advantageously, these types of crystals can efficiently produce an output beam with a frequency that is the sum of two input beams.

In an embodiment, the SFG crystal is a periodically poled lithium niobate, PPLN, crystal. The SFG crystal may have a bandwidth between 19.8nm and 50nm.

Advantageously, these specifications produce a more efficient system for performing logic operations in the optical domain.

In an embodiment, there is a demultiplexer for receiving the optical data output. The demultiplexer may be arranged to selectively output optical data having a predetermined frequency. Optical data having the predetermined frequency may be output to a first optical receiver device. Optical data which does not have the predetermined frequency may be output to a second optical receiver device.

Advantageously, the demultiplexer enables the optical data output to be routed to the intended destination node. The optical data output provided by the non-linear optical medium may also include unwanted optical signals of different frequencies. The demultiplexer may split the desired frequency output from the plurality of output frequencies and transmit the desired frequency output to the intended address. The unwanted optical signals may remain in a separate channel, such as a main waveguide, and are not routed to the destination address. The demultiplexer ensures that data is only transmitted to the destination node if the sender node uses the correct specific frequencies for both the data input and the address input.

Further advantageously, the demultiplexer may receive optical data outputs which have passed through two or more non-linear optical mediums. The optical data outputs may therefore relate to two or more intended addresses. The demultiplexer may be a demultiplexer prism which separates a first signal for the first address, a second signal for the second address, and so on. The demultiplexer prism also separates the unwanted optical signals. The demultiplexer prism enables the first separated signal to be transmitted to the first address, the second signal to be transmitted to the second address, and so on, while the unwanted signals may remain in a waveguide of the optical switch.

In an embodiment, the optical switch further comprises a second non-linear optical medium. The second non-linear optical medium is arranged in series with the first non-linear optical medium such that optical data output by the first non-linear optical medium is provided as an input to the second non-linear optical medium.

Advantageously, cascaded serial non-linear optical mediums enable the optical switch to support a plurality of nodes. Each non-linear optical medium may support an individual node.

In an embodiment, there is a demultiplexer prism configured to receive an optical data output from the second non-linear optical medium and separate the received optical data output from the second non-linear optical media 202b into a plurality of beams.

Advantageously, the demultiplexer prism enables all of the optical data output from the second non-linear optical medium to be separated so that the relevant beams from the output can be routed to their respective address nodes. That is, the optical data output from the second non-linear optical medium may comprise a plurality of optical beams, each of the plurality of optical beams comprising data intended for a different address node. The demultiplexer prism separates the plurality of optical beams into individual beams whereby the individual beams can then be transmitted to the intended address nodes.

In an embodiment, the optical switch further comprises a third non-linear optical medium. The third non-linear optical medium is arranged in parallel with the first non-linear optical medium.

Advantageously, this arrangement also enables the optical switch to support a plurality of nodes. Moreover, it is possible to perform more than one non-linear operation at a time.

In an embodiment, the optical switch further comprises a second non-linear optical medium and a third non-linear optical medium. The first, second and third non-linear optical mediums are arranged in parallel, and each comprise a PPLN crystal having a bandwidth of 19.8nm.

Advantageously, this is considered to be the optimal arrangement for the optical switch in terms of the efficiency of the switch.

In another aspect, there is a system comprising an optical switch. The optical switch is a switch according to any of the aforementioned embodiments.

Advantageously, this system performs logic operations entirely in the optical domain due to the presence of the optical switch. The system therefore consumes less power and provides a greater data throughput than current systems using state of the art electronic switches.

In another aspect, there is a method for operating an optical switch. The method includes inputting, to a non-linear optical medium, an optical data input and an optical address input. The method additionally includes combining the optical data input and the optical address input by the non-linear optical medium to generate an optical data output. The method also includes outputting, by the non-linear optical medium, the optical data output. A frequency of the optical data output is dependent on a frequency of the optical data input and a frequency of the optical address input.

Advantageously, this method enables logic operations to be performed entirely in the optical domain due to the presence of the optical switch. The method therefore consumes less power and provides a greater data throughput than current methods of performing data switching using state of the art electronic switches.

### BRIEF DESCRIPTION OF THE SEVERAL VIEWS OF THE DRAWINGS

One or more embodiments of the invention will now be described, by way of example only, with reference to the accompanying drawings, in which:
FIG. 1A illustrates an example of an optical switch according to aspects of the disclosure.
FIG. 1B illustrates a further example of an optical switch according to aspects of the disclosure.
FIG. 2 illustrates an additional example of an optical switch according to aspects of the disclosure.
FIG. 3 illustrates another example of an optical switch according to aspects of the disclosure.
FIG. 4 is a flow chart showing an example of a method of operating an optical switch according to aspects of the disclosure.
FIG. 5 shows an example full system diagram according to aspects of the disclosure.

### DETAILED DESCRIPTION

In the following detailed description, reference is made to the accompanying figures that form a part hereof, and in which are shown by way of illustration specific embodiments in which the invention may be practiced. These embodiments are described in sufficient detail to enable those skilled in the art to practice the invention, and it is to be understood that other embodiments may be utilized and that structural, logical, and electrical changes may be made to the described embodiments without departing from the scope of the present invention. The sequence of operations is not limited to that set forth herein in the described embodiments and may be changed as will be apparent to those skilled in the art, with the exception of operations necessarily occurring in a certain order.

It will also be appreciated that the embodiments described in this disclosure, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

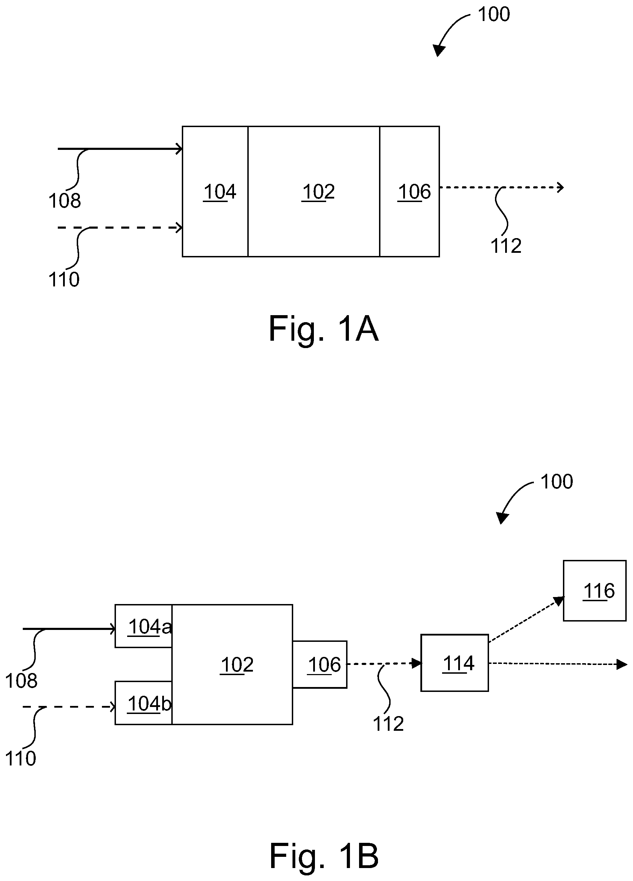

Figure 1A shows an example of an optical switch 100. The optical switch 100 may be provided in a network of multiple systems (nodes), where each node requires communication access to all other nodes. The optical switch holds inputs and outputs to all nodes in the network.

The optical switch 100 comprises a non-linear optical medium 102. The non-linear optical medium 102 is used to achieve the functionality that electronic logic would normally perform. The non-linear optical medium 102 may perform an arithmetic operation on the frequencies of the inputs provided to the non-linear optical medium 102. For example, the arithmetic operation may be a summation or a subtraction of the received frequencies.

The optical switch further comprises an input 104 and an output 106. The input 104 receives an optical data input 108 and an optical address input 110, and provides the optical data input 108 and the optical address input 110 to the non-linear optical medium 102. The non-linear optical medium 102 manipulates the received optical data input 108 and optical address input 110 to form an optical data output 112. The output 106 outputs the optical data output 112.

The optical data input 108 and optical address input 110 are received from a node in the network. The optical data input 108 comprises the data that the node would like to transmit, and the optical address input 110 comprises an address of a desired destination node. The optical switch 100 receives the optical data input 108 and, using the optical address input 110, enables the data of the optical data input 108 to be transmitted to the destination node.

For clarity, in the Figures, the optical data input 108 is represented using a solid arrow and the optical address input 110 is represented using a dashed arrow. The optical data output 112 is represented using a dotted arrow. Where possible, this representation is used consistently throughout the Figures.

The optical data input 108 is a data beam that can be modulated on one of D frequencies i.e. f_{d0-d(D-1)}. To send data, a sending node modulates an optical beam to encode a serialised form of the transmission data. The optical address input 110 is an address beam that can be modulated on one of A frequencies i.e. f_{a0-a(A-1)}. To send data, the sending node also modulates an optical beam where the frequency of this beam represents the destination node. The destination node may also be referred to as an address node, intended node, or receiving node. Each destination node is sensitive to only one combination of fₐ and f_{d}. In this way a sender can select which of the multiplicity of destination nodes to send data to optically directly, without the need for intermediate conversion into electronic signals.

Figure 1B shows another example of an arrangement of the optical switch 100. The input 104 comprises a data input 104a and a separate address input 104b. The data input 104a receives the optical data input 108 whilst the address input 104b receives the optical address input 110.

The non-linear optical medium 102 may be a sum frequency generator (SFG). These crystals take two beams of frequencies fₐ and f_{d} and produce an output beam of frequency fₐ+f_{d}. The efficiency of this conversion is dependent on many factors, such as the intensity of the beam, and can range from less than 1% up to 50%. The output from the non-linear optical medium 102 may therefore also include unwanted frequencies. The unwanted frequencies may comprise fₐ+fₐ, f_{d}+f_{d} and unconverted beams fₐ and f_{d}.

The optical data output 112 is provided to a separating means, such as a demultiplexer 114. The demultiplexer 114 may be configured to split the desired frequency fₐ+f_{d} from the optical data output 112 beam. The beam comprising the desired frequency fₐ+f_{d} may be transmitted to the destination address 116. The unwanted frequencies may remain in a main waveguide of the optical switch 100. That is, the unwanted frequencies may not be transmitted to a particular receiver.

When a network requires multiple switches, a single SFG crystal with a large bandwidth can be used as the non-linear optical medium 102. Having a large bandwidth increases the number of different wavelengths of light that the non-linear optical medium 102 can accept, and so increases the number of nodes that may be supported by the optical switch.

Using an optical switch according to Figure 1A or 1B, a mesh topology of interconnected nodes can be constructed.

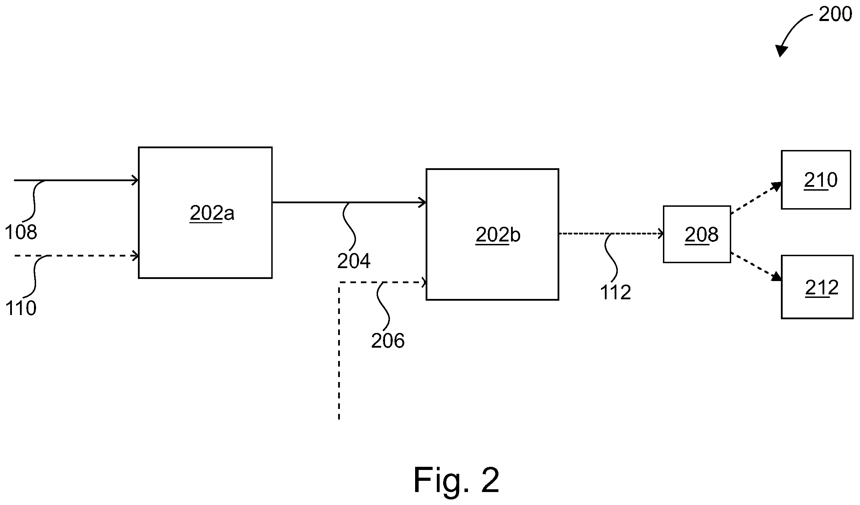

Figure 2 shows another example of an optical switch 200. In this optical switch 200, there is a first non-linear optical medium 202a and a second non-linear optical medium 202b arranged in series. As the bandwidth of non-linear optical medium, such as an SFG crystal increases, the conversion efficiency of the non-linear optical medium decreases. Using a plurality of non-linear optical media thereby enables a larger number of nodes to be more efficiently supported.

The provision of two non-linear optical media in this Figure is purely exemplary, and the skilled person would recognise that three or more non-linear optical media could be provided in series. For clarity, this Figure shows just two non-linear optical media.

The first non-linear optical medium 202a and the second non-linear optical medium 202b may each be optimised for different addresses fₐ₁+f_{d} and fₐ₂+f_{d} respectively.

A non-linear optical medium, such as an SFG, may be designed to most efficiently perform fₐ+f_{d}. That is, the non-linear optical medium can be phase-matched so that it only performs a nonlinear operation if specific inputs are present. If the address beam frequency differs from fₐ or the data beam frequency differs from f_{d} the efficiency of the addition performed by the SFG will be several orders of magnitude lower. When the SFGs do not match the address and data frequencies, they pass the the input beams fₐ and f_{d} with just a small amount of loss. Therefore, in a series of SFGs, if any of the SFGs in the chain match fₐ and f_{d}, the result (fₐ+f_{d}) will appear at the end of the chain. All possible results from the operations performed by the series of SFG crystals can then be separated by a separating means. If none of the SFGs are tuned to match fₐ and f_{d} then no output will be produced.

As shown in Figure 2, the first non-linear optical medium 202a receives an optical data input 108 and an optical address input 110. The first non-linear optical medium 202a outputs one or more optical beams 204. The frequency of the one or more optical beams 202 depends on whether the first non-linear optical medium 202a is phase-matched with the frequencies of the optical data input 108 and the optical address input 110. If the first non-linear optical medium 202a is phase-matched with the optical data input 108 and optical address input 110, the frequency of the optical beam 204 will be the sum of the frequencies of the optical data input 108 and the optical address input 110. If the first non-linear optical medium 202a is not phase-matched with the frequencies of the optical data input 108 or the optical address input 110, the first non-linear optical medium 202a will output optical beams 204 with the same frequencies as the optical data input 108 and the optical address input 110. That is, the first non-linear optical medium 202a will effectively output the optical data input 108 and the optical address input 110.

The second non-linear optical medium 202b then receives the optical beam 204 output from the first non-linear optical medium 202a, along with a second optical address input 206 received from a different node. The second non-linear optical medium 202b outputs an optical data output 112, where the frequency of the data output 112 is dependent on the frequency of the optical beam 204 and the frequency of the second optical address input 206. The data output 112 may comprise a plurality of beams, each having a different frequency.

For example, a first non-linear optical medium 202a may be phase-matched to an address frequency fₐ₁, the second non-linear optical medium 202b may be phase-matched to an address frequency fₐ₂, and both non-linear optical media may be phase-matched to a data input of frequency f_{d}. If the optical data input 108 has a frequency f_{d} and the optical address input 110 has a frequency fₐ₁, the first non-linear optical medium 202a will output an optical beam 204 with a frequency of f_{d} + fₐ₁. This output beam is provided to the second non-linear optical medium 202b as a data input. The second non-linear optical medium 202b may also receive a second optical address input 206. The second non-linear optical medium 202b is not phase-matched to accept data with a frequency f_{d} + fₐ₁ so the output with this frequency traverses through the second non-linear optical medium 202b and is output as optical data output 112.

As another example, with the same first non-linear optical medium 202a and second non-linear optical medium 202b, if the optical data input 108 has a frequency f_{d} and the optical address input 110 has a frequency fₐ₂, the first non-linear optical medium 202a will not perform an operation on the inputs because the first non-linear optical medium 202a is not phase-matched to accept a frequency of fₐ₂. The inputs will pass through first non-linear optical medium 202a as optical beam 204 and be provided to second non-linear optical medium 202b as the inputs for second non-linear optical medium 202b. Since the second non-linear optical medium 202b is phase-matched to accept inputs with these frequencies, the second non-linear optical medium 202b will perform a non-linear operation on the beams, resulting in a beam of frequency f_{d} + fₐ₂. The optical data output 112 will therefore include a beam having a frequency of f_{d} + fₐ₂.

As another example, with the same first non-linear optical medium 202a and second non-linear optical medium 202b, if the optical data input 108 has a frequency f_{d} and the optical address input 110 has a frequency fₐ₃, neither first non-linear optical medium 202a nor second non-linear optical medium 202b will perform a non-linear operation on the inputs. The inputs will pass through both non-linear optical media unchanged, so the optical data output 112 will include beams with frequencies fₐ₃ and f_{d}. Similarly, if the optical data input 108 has a frequency different to f_{d}, neither first non-linear optical medium 202a nor the second non-linear optical medium 202b will perform a non-linear operation on the inputs, and the inputs will be output in data output 112 unchanged.

The optical data output 112 is passed into a demultiplexer prism 208, or a wavelength-division demultiplexer, where the plurality of beams forming the data output 112 are separated. Optical data having a predetermined frequency is output to a first optical receiver 210 device. Optical data which does not have a predetermined frequency may be output to a second optical receiver 212 device. The demultiplexer prism 208 therefore routes the data to the correct address node depending on the frequencies that the demultiplexer prism 208 has received as an input. If none of the non-linear optical media in the optical switch 200 are tuned to match the frequencies of the data inputs and the address inputs, then no output will be produced.

Using a series chain structure of non-linear optical media according to Figure 2, bus and star network topologies can be produced.

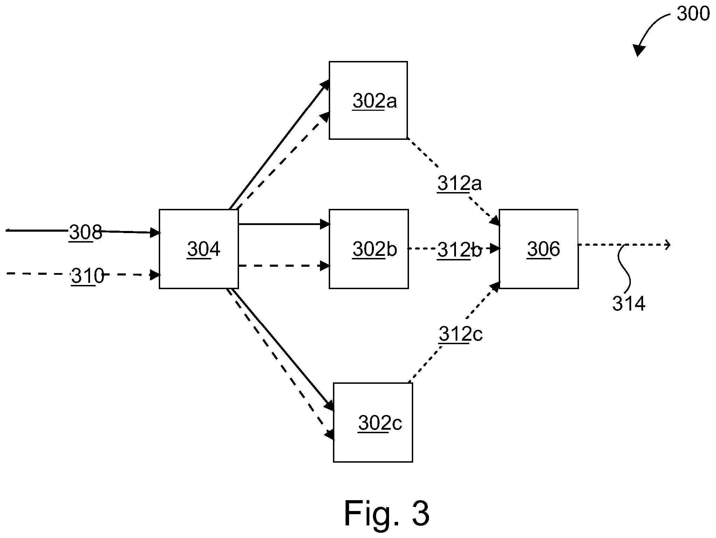

Figure 3 shows another example of an optical switch 300. In this optical switch 300 there is a first non-linear optical medium 302a, a second non-linear optical medium 302b, and a non-linear optical medium 302c arranged in parallel. The optical switch 300 further comprises a splitter 304 and a wavelength-division multiplexer 306.

The provision of three non-linear optical media in this Figure is purely exemplary, and the skilled person would recognise that any number of non-linear optical media over two could be provided in parallel. For example, there could be two non-linear optical media arranged in parallel, or four non-linear optical media arranged in parallel. For clarity, this Figure shows just three non-linear optical media.

A splitter 304 receives an optical data input 308 and an optical address input 310 and splits the received inputs across each of the non-linear optical media. In this case, the splitter 304 divides each of the optical data input 308 and the optical address input 310 into three beams, and provides an optical data input 308 beam and an optical address input 310 beam to each of the non-linear optical media. That is, the splitter 304 enables each of the first non-linear optical medium 302a, the second non-linear optical medium 302b and the non-linear optical medium 302c to receive the optical data input 308 and the optical address input 310.

Each of the non-linear optical media provide an output (312a, 312b, 312c) based on the frequencies of the received beams and whether the non-linear media are phase-matched to the received frequencies. If any of the first non-linear optical medium 302a, the second non-linear optical medium 302b or the non-linear optical medium 302c are phase-matched to use data with the frequencies of the optical data input 308 and the optical address input 310, that non-linear optical medium will perform a non-linear operation on the input beams. The output from that non-linear optical medium can then be routed to the intended destination node, via the wavelength-division multiplexer 306. The wavelength-division multiplexer 306 combines the received outputs (312a, 312b, 312c) into a combined output 314. The output 314 may be provided to a separating means, such as a demultiplexer, in order to route just the desired data to the intended destination node.

For example, a first non-linear optical medium 302a may be phase-matched to an address frequency fₐ₁, the second non-linear optical medium 302b may be phase-matched to an address frequency fₐ₂, the third non-linear optical medium 302c may be phase-matched to an address frequency fₐ₃, and all non-linear optical media may be phase-matched to a data input of frequency f_{d}. If the optical data input 108 has a frequency f_{d} and the optical address input 110 has a frequency fₐ₁, the first non-linear optical medium 302a will output an optical beam 312a with a frequency of f_{d} + fₐ₁. The second and third non-linear optical media are not phase-matched to the address frequency, so the input beams will pass straight through these media to form the outputs 312b and 312c respectively. The output beams (312a, 312b, 312c) will pass to the wavelength-division multiplexer 306, where they are combined to form an output 314. Since output beam 314 includes a beam with the frequency f_{d} + fₐ₁, the output beam 314 can be routed to the intended destination.

The skilled person would understand that an optical switch may include a plurality of non-linear optical media, with the non-linear optical media provided in both series and parallel arrangements.

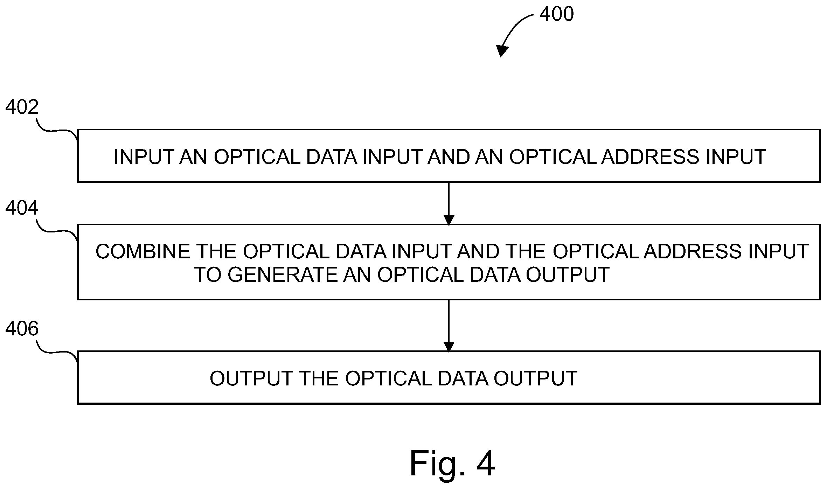

Figure 4 shows an example method 400 for operating an optical switch. The switch may be an optical switch 100. In step 402, an optical data input 108 and an optical address input 110 are input to a non-linear optical medium 102. In step 404, the non-linear optical medium 102 combines the optical data input 108 and the optical address input 110 to generate an optical data output 112. In step 406, the non-linear optical medium 102 outputs the optical data output 112. A frequency of the optical data output 112 is dependent on a frequency of the optical data input 108 and a frequency of the optical address input 110.

The method may further comprise providing the optical data output 112 to a demultiplexer 114. The method may further comprise separating, by the demultiplexer 114, the optical data output 112 into a plurality of beams and selectively outputting optical data having a desired frequency. The selected optical data may be transmitted or output to a first optical receiver. Optical data which does not have the desired frequency may be output to a second optical receiver.

The method 400 may further comprise performing any of the actions described in relation to the optical switch of any of Figures 1A, 1B, 2, or 3. For conciseness, such actions are not repeated here.

Whilst current state of the art electronic switches have a power consumption of 850 Watts (W), the passive nature of the network switch of the present invention means that no electronic power is required for switching logic, so the power required for switching logic is in principle reduced by 100%. However, a power budget of up to 80W is reserved for any potential amplification of the input signals that are required for the optical switches. Even with this power budget, there is still a reduction in power of 90%. Simulations in MatLab have shown that 20W of electrical power may be required for the amplification in integrated switching, whereas up to 40W may be required for benchtop switching. This is a significant improvement on standard electronic switching circuits.

Further simulations in Matlab to model the performance of each of a single wide-bandwidth SFG crystal, three SFG crystals in series, and three SFG crystals arranged in parallel have been performed. The simulations included 1km of fibre cable either side of a 5x5mm integrated Lithium Niobate chip. The simulations assumed a constant input power of 100mW. The single wide-bandwidth SFG crystal was a 12.5nm PPLN, whilst the series and parallel arrangements used 4.3nm PPLNs. The results concluded that, in an integrated setup, using a single wide bandwidth SFG crystal is more efficient than using multiple smaller bandwidth PPLNs, and the series arrangement was the least efficient. In particular, the single wide-bandwidth crystal is optimal for low port-count integrated settings. For a benchtop setup, the single wide bandwidth SFG was found to be least efficient and the arrangement with three parallel SFG crystals was optimal. In particular, the arrangement with 3 parallel SFG crystals is estimated to be optimal for port counts above 20 ports.

A system including an optical switch according to any of Figures 1A, 1B, 2 or 3 may be provided. The system may further comprise a conversion means for converting a signal output from the optical switch to a lower frequency. This conversion means may comprise a down-converter. Converting the optical data output using a conversion means may enable the output signal to be detected by a standard transceiver.

The optical switch described herein in relation to a network switch may be used in any switching embodiment. For example, the optical switch may be used in long-distance switching over satellites. The optical switch may be used in an XPU interconnect. An XPU interconnect is a switch that sits low-level and is connected to the memory of each processor on a multi-processor motherboard. Traditionally, a motherboard with multiple processors would have a shared memory, where every processor can access the shared memory. However, this causes race conditions and gaps in processing time if multiple processors need access to the memory at the same time. XPU interconnects switch the data straight to the private memory of each processor.

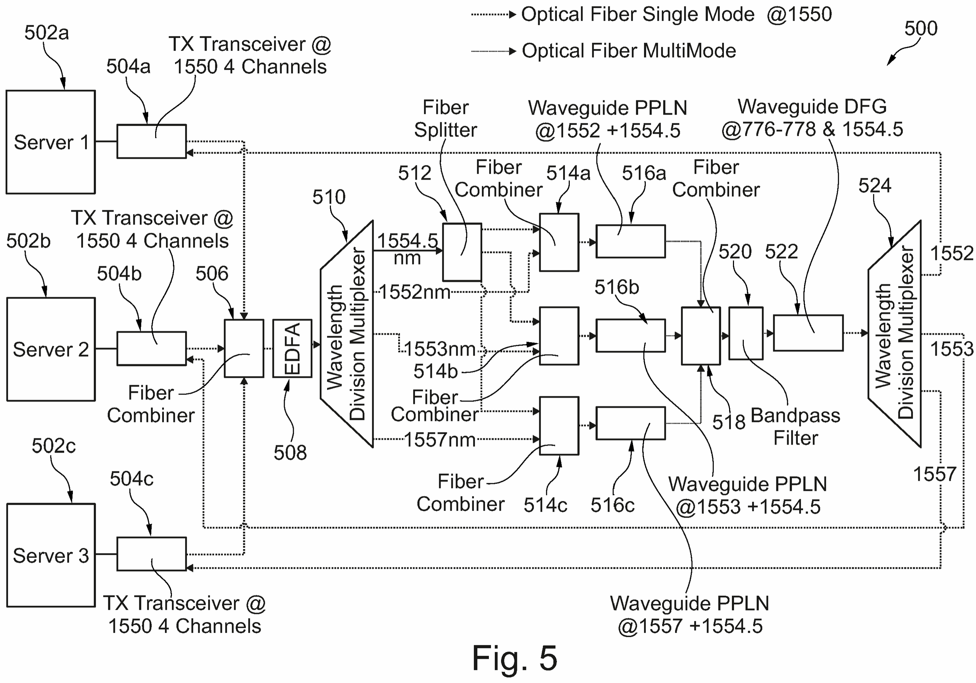

Figure 5 shows an example system 500. In this full system diagram, the system 500 includes three optical switches in parallel and a down-conversion. This example system 500 comprises a plurality of servers 502a, 502b, 502c. These servers may also be referred to as nodes. Each node may be connected to a respective transceiver 504a, 504b, 504c, for transmitting and receiving data on optical signals transmitted between the plurality of nodes.

The system 500 further comprises a fiber combiner 506 for receiving the optical signals transmitted from each of the plurality of transceivers 504a, 504b, 504c. Each transceiver may transmit the optical signals using a separate optical fiber, so the fiber combiner receives optical signals via three input optical fibers. The fiber combiner 506 combines the optical signals received from each of the input optical fibers such that the optical signals may be further transmitted through the system 500 using fewer optical fibers. For example, the fiber combiner 506 may combine the signals received from the three input optical fibers into a single output optical fiber. The single output optical fiber then carries each of the signals received from the three input optical fibers. Providing the optical signals in a single optical fiber allows the optical signals to be efficiently transmitted over long distances.

In the example system 500, the signals output from the fiber combiner 506 are provided to an optical amplifier 508. The optical amplifier 508 may be an erbium doped fiber amplifier. The optical amplifier 508 amplifies the optical signal to compensate for any loss of light in the optical fiber without converting the optical signal to an electrical signal.

The amplified optical signals output from the optical amplifier 508 are input to a wavelength-division multiplexer (WDM) demultiplexer 510 to separate the signals so they may be provided to each of the optical switches. Signals of different wavelengths are provided on separate optical fibers. The optical data output from the WDM demultiplexer, in this case having a wavelength of 1554.5nm, is input to a further fiber splitter 512 so that the optical data may be separated and transmitted to each of the optical switches at the same time.

The signals from the WDM demultiplexer 510 and the fiber splitter 512 are combined by fiber combiners 514a, 514b, 514c. Each fiber combiner is associated with a respective optical switch 516a, 516b, 516c. In this case, there are three optical switches arranged in parallel. The fiber combiners combine the data and address optical signals received from two separate optical fibers into a single optical fiber. Each optical switch receives, from their respective fiber combiner, the optical signals corresponding to an optical data input and an optical address input.

The optical switches 516a, 516b, 516c, perform a logic operation on the data input and address input and outputs the optical data output. The optical data outputs from each optical switch are provided to a further fiber combiner 518 to combine the optical data outputs received on separate optical fibers into a single optical fiber. The fiber combiner 518 may comprise a wavelength-division multiplexer.

The output from the further fiber combiner 518 is provided as an input to the bandpass filter 520. The bandpass filter enables light of a desired wavelength to pass through the filter and absorbs or reflects light of other wavelengths. The bandpass filter may comprise a demultiplexer prism.

Signals output from the bandpass filter 520 are transmitted to an optical detector 522. The optical detector may convert the received optical signals into electrical signals. The output from the optical detector may be transmitted to a further wavelength-division multiplexer 524. The wavelength-division multiplexer 524 may process the received signals, extract the data from the received signals, and transmit the extracted data to the intended destination node.

## Claims

1. An optical switch (100) comprising:
an input (104) for receiving an optical data input (108) and an optical address input (110), wherein the optical data input (108) comprises a first optical beam modulated on a first frequency and the optical address input (110) comprises a second optical beam modulated on a second frequency;
an output (106) for outputting an optical data output (112); and
a first non-linear optical medium;
wherein the first non-linear optical medium (102) is arranged to combine the optical data input (108) and the optical address input (110) to generate the optical data output; and
wherein a frequency of the optical data output is dependent on a frequency of the optical data input (108) and a frequency of the optical address input (110).

2. The optical switch (100) of claim 1, wherein the input (104) comprises a data input for receiving the optical data input (108) and an address input for receiving the optical address input.

3. The optical switch (100) of claim 1 or 2, wherein the frequency of the optical data output (112) is dependent on an arithmetic operation of the frequency of the optical data input (108) and the frequency of the optical address input (110).

4. The optical switch (100) of any one of claims 1 to 3, further comprising a demultiplexer (114) for receiving the optical data output (112).

5. The optical switch (100) of claim 4, wherein the demultiplexer (114) is arranged to selectively output optical data having a predetermined frequency.

6. The optical switch (100) of claim 5, wherein optical data having the predetermined frequency is output to a first optical receiver device.

7. The optical switch (100) of claim 5 or 6, wherein optical data which does not have the predetermined frequency is output to a second optical receiver device.

8. The optical switch (100) of any one of claims 1 to 7, further comprising a second non-linear optical medium (202b), wherein the second non-linear optical medium is arranged in series with the first non-linear optical medium (202a) such that optical data output by the first non-linear optical medium is provided as an input to the second non-linear optical medium.

9. The optical switch (100, 200) of claim 8, further comprising a demultiplexer prism (208) configured to receive an optical data output (112) from the second non-linear optical medium (202b) and separate the received optical data output into a plurality of beams.

10. The optical switch (100, 200, 300) of any one of claims 1 to 9, further comprising a third non-linear optical medium (302c), wherein the third non-linear optical medium is arranged in parallel with the first non-linear optical medium (302a).

11. The optical switch (100, 200, 300) of any one of claims 1 to 10, wherein the non-linear optical medium is a sum-frequency generation, SFG, crystal.

12. The optical switch (100, 200, 300) of claim 11, wherein the SFG crystal is a periodically poled lithium niobate, PPLN, crystal.

13. The optical switch (100, 200, 300) of claim 11 or 12, wherein the SFG crystal has a bandwidth between 19.8nm and 50nm.

14. A system comprising: an optical switch (100, 200, 300) according to any one of claims 1 to 13.

15. A method (400) of operating an optical switch, the method comprising:
inputting (402), to a non-linear optical medium, an optical data input and an optical address input; wherein the optical data input comprises a first optical beam modulated on a first frequency and the optical address input comprises a second optical beam modulated on a second frequency;
combining (404), by the non-linear optical medium, the optical data input and the optical address input to generate an optical data output; and
outputting (406), by the non-linear optical medium, the optical data output;
wherein a frequency of the optical data output is dependent on a frequency of the optical data input and a frequency of the optical address input.

## Patentansprüche

1. Optischer Schalter (100), umfassend:
einen Eingang (104) zum Empfangen eines optischen Dateneingangs (108) und eines optischen Adresseneingangs (110), wobei der optische Dateneingang (108) einen ersten optischen Strahl umfasst, der auf eine erste Frequenz moduliert ist, und der optische Adresseneingang (110) einen zweiten optischen Strahl umfasst, der auf eine zweite Frequenz moduliert ist;
einen Ausgang (106) zum Ausgeben eines optischen Datenausgangs (112); und
ein erstes nichtlineares optisches Medium;
wobei das erste nichtlineare optische Medium (102) angeordnet ist, um den optischen Dateneingang (108) und den optischen Adresseneingang (110) zu kombinieren, um den optischen Datenausgang zu erzeugen; und
wobei eine Frequenz des optischen Datenausgangs von einer Frequenz des optischen Dateneingangs (108) und einer Frequenz des optischen Adresseneingangs (110) abhängig ist.

2. Optischer Schalter (100) nach Anspruch 1, wobei der Eingang (104) einen Dateneingang zum Empfangen des optischen Dateneingangs (108) und einen Adresseneingang zum Empfangen des optischen Adresseneingangs umfasst.

3. Optischer Schalter (100) nach Anspruch 1 oder 2, wobei die Frequenz des optischen Datenausgangs (112) von einer arithmetischen Operation der Frequenz des optischen Dateneingangs (108) und der Frequenz des optischen Adresseneingangs (110) abhängig ist.

4. Optischer Schalter (100) nach einem der Ansprüche 1 bis 3, ferner umfassend einen Demultiplexer (114) zum Empfangen des optischen Datenausgangs (112).

5. Optischer Schalter (100) nach Anspruch 4, wobei der Demultiplexer (114) angeordnet ist, um selektiv optische Daten, die eine vorbestimmte Frequenz aufweisen, auszugeben.

6. Optischer Schalter (100) nach Anspruch 5, wobei optische Daten, die die vorbestimmte Frequenz aufweisen, an eine erste optische Empfängereinrichtung ausgegeben werden.

7. Optischer Schalter (100) nach Anspruch 5 oder 6, wobei optische Daten, die nicht die vorbestimmte Frequenz aufweisen, an eine zweite optische Empfängereinrichtung ausgegeben werden.

8. Optischer Schalter (100) nach einem der Ansprüche 1 bis 7, ferner umfassend ein zweites nichtlineares optisches Medium (202b), wobei das zweite nichtlineare optische Medium in Reihe mit dem ersten nichtlinearen optischen Medium (202a) angeordnet ist, sodass optische Daten, die durch das erste nichtlineare optische Medium ausgegeben werden, als ein Eingang für das zweite nichtlineare optische Medium bereitgestellt werden.

9. Optischer Schalter (100, 200) nach Anspruch 8, ferner umfassend ein Demultiplexerprisma (208), das dazu konfiguriert ist, einen optischen Datenausgang (112) von dem zweiten nichtlinearen optischen Medium (202b) zu empfangen und den empfangenen optischen Datenausgang in eine Vielzahl von Strahlen zu trennen.

10. Optischer Schalter (100, 200, 300) nach einem der Ansprüche 1 bis 9, ferner umfassend ein drittes nichtlineares optisches Medium (302c), wobei das dritte nichtlineare optische Medium parallel zu dem ersten nichtlinearen optischen Medium (302a) angeordnet ist.

11. Optischer Schalter (100, 200, 300) nach einem der Ansprüche 1 bis 10, wobei das nichtlineare optische Medium ein Summenfrequenzerzeugungskristall, SFG- Kristall, ist.

12. Optischer Schalter (100, 200, 300) nach Anspruch 11, wobei der SFG-Kristall ein periodisch gepolter Lithiumniobat-Kristall, PPLN-Kristall, ist.

13. Optischer Schalter (100, 200, 300) nach Anspruch 11 oder 12, wobei der SFG-Kristall eine Bandbreite zwischen 19,8 nm und 50 nm aufweist.

14. System, umfassend: einen optischen Schalter (100, 200, 300) gemäß einem der Ansprüche 1 bis 13.

15. Verfahren (400) zum Betreiben eines optischen Schalters, wobei das Verfahren Folgendes umfasst:
Eingeben (402) eines optischen Dateneingangs und eines optischen Adresseneingangs in ein nichtlineares optisches Medium; wobei der optische Dateneingang einen ersten optischen Strahl umfasst, der auf eine erste Frequenz moduliert ist, und der optische Adresseneingang einen zweiten optischen Strahl umfasst, der auf eine zweite Frequenz moduliert ist;
Kombinieren (404), durch das nichtlineare optische Medium, des optischen Dateneingangs und des optischen Adresseneingangs, um einen optischen Datenausgang zu erzeugen; und
Ausgeben (406), durch das nichtlineare optische Medium, des optischen Datenausgangs;
wobei eine Frequenz des optischen Datenausgangs von einer Frequenz des optischen Dateneingangs und einer Frequenz des optischen Adresseneingangs abhängig ist.

## Revendications

1. Commutateur optique (100) comprenant :
une entrée (104) destinée à recevoir une entrée de données optiques (108) et une entrée d'adresse optique (110), ladite entrée de données optiques (108) comprenant un premier faisceau optique modulé sur une première fréquence et ladite entrée d'adresse optique (110) comprenant un second faisceau optique modulé sur une seconde fréquence ;
une sortie (106) destinée à émettre en sortie une sortie de données optiques (112) ; et
un premier support optique non linéaire ;
ledit premier support optique non linéaire (102) étant agencé pour combiner l'entrée de données optiques (108) et l'entrée d'adresse optique (110) afin de générer la sortie de données optiques ; et
une fréquence de la sortie de données optiques dépendant d'une fréquence de l'entrée de données optiques (108) et d'une fréquence de l'entrée d'adresse optique (110).

2. Commutateur optique (100) de la revendication 1, ladite entrée (104) comprenant une entrée de données destinée à recevoir l'entrée de données optiques (108) et une entrée d'adresse destinée à recevoir l'entrée d'adresse optique.

3. Commutateur optique (100) de la revendication 1 ou 2, ladite fréquence de la sortie de données optiques (112) dépendant d'une opération arithmétique de la fréquence de l'entrée de données optiques (108) et de la fréquence de l'entrée d'adresse optique (110).

4. Commutateur optique (100) de l'une quelconque des revendications 1 à 3, comprenant en outre un démultiplexeur (114) destiné à recevoir la sortie de données optiques (112).

5. Commutateur optique (100) de la revendication 4, ledit démultiplexeur (114) étant agencé pour émettre sélectivement en sortie des données optiques possédant une fréquence prédéfinie.

6. Commutateur optique (100) de la revendication 5, des données optiques possédant la fréquence prédéfinie étant émises en sortie vers un premier dispositif récepteur optique.

7. Commutateur optique (100) de la revendication 5 ou 6, des données optiques qui ne possèdent pas la fréquence prédéfinie étant émises en sortie vers un second dispositif récepteur optique.

8. Commutateur optique (100) de l'une quelconque des revendications 1 à 7, comprenant en outre un second support optique non linéaire (202b), ledit second support optique non linéaire étant agencé en série avec le premier support optique non linéaire (202a) de sorte que des données optiques émises en sortie par le premier support optique non linéaire sont fournies en tant qu'entrée au second support optique non linéaire.

9. Commutateur optique (100, 200) de la revendication 8, comprenant en outre un prisme de démultiplexeur (208) conçu pour recevoir une sortie de données optiques (112) en provenance du second support optique non linéaire (202b) et séparer la sortie de données optiques reçue en une pluralité de faisceaux.

10. Commutateur optique (100, 200, 300) de l'une quelconque des revendications 1 à 9, comprenant en outre un troisième support optique non linéaire (302c), ledit troisième support optique non linéaire étant agencé en parallèle avec le premier support optique non linéaire (302a).

11. Commutateur optique (100, 200, 300) de l'une quelconque des revendications 1 à 10, ledit support optique non linéaire étant un cristal de génération de fréquence de somme, SFG.

12. Commutateur optique (100, 200, 300) de la revendication 11, ledit cristal SFG étant un cristal de niobate de lithium polarisé périodiquement, PPLN.

13. Commutateur optique (100, 200, 300) de la revendication 11 ou 12, ledit cristal SFG possédant une largeur de bande comprise entre 19,8 nm et 50 nm.

14. Système comprenant : un commutateur optique (100, 200, 300) selon l'une quelconque des revendications 1 à 13.

15. Procédé (400) de fonctionnement d'un commutateur optique, le procédé comprenant :
l'entrée (402), sur un support optique non linéaire, d'une entrée de données optiques et d'une entrée d'adresse optique ; ladite entrée de données optiques comprenant un premier faisceau optique modulé sur une première fréquence et ladite entrée d'adresse optique comprenant un second faisceau optique modulé sur une seconde fréquence ;
la combinaison (404), par le support optique non linéaire, de l'entrée de données optiques et de l'entrée d'adresse optique pour générer une sortie de données optiques ; et
l'émission en sortie (406), par le support optique non linéaire, de la sortie de données optiques ;
une fréquence de la sortie de données optiques dépendant d'une fréquence de l'entrée de données optiques et d'une fréquence de l'entrée d'adresse optique.
